# DEMANDE DE BREVET EUROPEEN

(11) **EP 1 190 755 A1**
(43) Date de publication de la demande: **27.03.2002**
(21) Numéro de dépôt: 01402416.0
(22) Date de dépôt: 20.09.2001
(51) Int. Cl.: B01D 29/05, B01D 29/15, B01D 29/52, B01D 29/64, B01D 29/68, B01D 29/82, B01D 29/70, B01D 37/03

(54) **Procédé de filtration de boues ou de lisiers et dispositif pour sa mise en oeuvre**

(30) Priorité: 26.09.2000 FR 0012241
(71) Demandeur: Norais Technologies, 22150 L'Hermitage Lorge (FR)
(72) Inventeur: Norais, Marcel, 22150 l'Hermitage Lorge (FR)
(74) Mandataire: Haicour, Philippe

(57) **Abrégé**

Les boues ou lisiers sont soumis successivement :
- à un prétraitement d'homogénéisation et texturation en cuve (M01) par addition de matières fibreuses,
- à un traitement de coagulation, puis de floculation en ligne dans des mélangeurs tubulaires (M02 - M03),
- à une séparation de phases dans un séparateur rotatif (M04).

Les co-produits solides peuvent être traités en compostage et valorisés comme amendements organiques ; les co-produits liquides peuvent être épurés de leur azote ammoniacal par traitement biologique et rejetés dans l'environnement.

## Description

L'invention concerne un procédé de traitement des boues ou des lisiers et le dispositif pour sa mise en oeuvre.

Le traitement industriel des boues passe obligatoirement par leur séparation en une phase liquide (co-produit liquide) et une phase solide (co-produit solide). Une telle séparation en une phase liquide sans particules en suspension et en une phase essorée à taux raisonnable d'humidité est très souvent une opération fort difficile. Pour atteindre des vitesses de filtration acceptables pour les installations industrielles ou agricoles, on a mis en oeuvre des dispositifs fonctionnant grâce à une importante différence de pression sur les filtres, que ce soit par application d'une pression sur la boue à filtrer, ou par application d'une dépression sous les filtres, avec l'inconvénient, outre celui d'une complication de l'appareillage, d'un colmatage rapide des organes de filtration. D'autres fonctionnent par simple essorage par gravité sur toiles ou bandes filtrantes, dont l'inconvénient majeur est la lenteur de la filtration et l'encombrement de l'installation qui en résulte.

Le procédé selon l'invention, qui remédie à ces inconvénients, réalise cette séparation grâce à une succession d'opérations : homogénéisation de la boue ou du lisier (dans la suite, on dira simplement boue) avec correction de son taux de matières sèches par introduction d'un structurant constitué de matières fibreuses non colloïdales, coagulation, floculation, éventuellement ajustement du taux de matières sèches, séparation des phases, post-traitements séparés des co-produits solide et liquide.

L'homogénéisation et la texturation des boues est un préalable nécessaire au procédé parce qu'il s'adresse à des matières dont l'âge et la composition fluctuent beaucoup trop pour qu'on puisse envisager qu'ils puissent être filtrés à tout moment par un matériel aussi tolérant soit-il. Leur correction primaire par introduction d'un certain pourcentage de fibres grossières dans le mélangeur primaire permet en quelque sorte d'approcher la composition une boue, sinon standard, du moins traitable avec fiabilité. On peut utiliser pour cela des matériaux très divers : déchets verts broyés, soies de porcs, débris de céréales, débris de cellulose, copeaux et sciures secs ou humides, voire recyclage de co-produit sec issu de l'installation elle-même. Les règles de structuration des boues sont des cas d'espèces. L'addition de structurant à raison de 2 % en poids par rapport à la boue est un ordre de grandeur approximatif raisonnable.

Il est également nécessaire de soumettre la boue homogénéisée et texturée à un traitement de floculation et de coagulation. L'exigence d'une coagulation naît des conditions mêmes d'exploitation des installations d'élevage ou des stations d'épuration. Les boues sont en effet rassemblées temporairement dans des fosses de transit où ils subissent déjà une certaine maturation et dans lesquelles il est de coutume d'ajouter des liquéfiants chimiques ou biologiques, des anticoagulants et des dispersants sans l'emploi desquels il se forme des amas qui à terme obstruent les canalisations d'évacuation. C'est l'une des raisons pour lesquelles ces boues sont des mélanges substances si difficiles à filtrer.

Le procédé selon l'invention a la particularité d'opérer, d'une part la texturation des boues dans une cuve située en tête de l'installation, et d'autre part la coagulation, la floculation, accessoirement la correction de teneur en texturant en ligne.

Les agents de coagulation ont pour fonction de déstabiliser les particules fines et colloïdales en suspension dans les boues. On utilise ici le sulfate d'aluminium ou autres sels d'aluminium (Wac® , Alba® , Claral® ) de préférence au chlorure ferrique attesté dans l'art antérieur qui est très agressif envers les matériels en inox et perturbateur de l'activité algale photosynthétique à laquelle on peut vouloir soumettre les effluents liquides de l'installation. Les agents de floculation utilisés ont pour effet d'agglomérer les particules en suspension et de les amener à des tailles compatibles avec une vitesse de séparation liquide / solide acceptable. On préfère les copolymères d'acrylamide et les dérivés cationiques de l'acide acrylique du commerce (Stockhausen 852 BC, SNF Floerger FO 4250).

Ces opérations d'homogénéisation, texturation, coagulation, floculation, séparation et post-traitements de co-produits solides et liquides sont réalisées dans une installation qui comprend :
- un mélangeur primaire qui recueille les boues en provenance de leur point de production ou de stockage temporaire et reçoit le structurant ;
- un mélangeur secondaire qui reçoit les boues homogénéisées et structurées et dans lequel s'opère leur coagulation ;
- un mélangeur final réchauffé qui reçoit les boues coagulées et dans lequel s'opère leur floculation et leur fluidisation, le cas échéant un ajustement de leur teneur en matières sèches ;
- un séparateur, qui opère sur les boues prétraitées du mélangeur final et les sépare en matières en suspension sous forme de gâteaux de filtration et en phase liquide filtrée ;
- une chaîne d'évacuation et de post-traitement des gâteaux de filtration ;
- une chaîne d'évacuation et de post-traitement des liquides filtrés.

Le mélangeur primaire est généralement une cuve couverte, équipée d'un système d'agitation lent, d'un système d'introduction du structurant avec crible vibrant et broyeur, d'une pompe de renvoi et des habituels moyens de contrôle des niveaux.

Le mélangeur secondaire est un tube vertical équipé d'un agitateur central multipale occupant toute la longueur du tube, d'un système d'introduction de coagulant vers les deux-tiers bas du tube (pour éviter les moussages intempestifs), d'une pompe de renvoi et de moyens de contrôle des niveaux.

Le mélangeur final est un tube vertical muni, d'un agitateur central multipale occupant toute la longueur du tube, d'un système d'introduction en tête de floculant, d'un système d'introduction en tête de matières sèches et de moyens de contrôle des niveaux. Le mélangeur final est en charge manométrique contrôlée par une vanne d'admission sur le séparateur. Il est également équipé d'un système de réchauffage modéré (entre 25 et 35°C) de la boue destiné à en faciliter l'écoulement dans le séparateur.

Le séparateur est un dispositif original de séparation des phases ; c'est également un objet de la présente invention. Il est constitué d'un ensemble tubulaire rotatif formant cage de filtration dont la forme générale est celle d'un cylindre à troncatures longitudinales disposées symétriquement par rapport à son axe de rotation et équipées surfaces filtrantes, de préférence quatre, et d'une chambre statique de compression disposée au-dessus de la cage de filtration de façon à épouser la découpe des surfaces filtrantes et à l'intérieur de laquelle se déplace verticalement un piston-presse. La cage rotative est montée sur un axe horizontal est animée d'une rotation par fractions de tour de façon à amener successivement chacun de ses filtres sous la chambre de compression.

Le séparateur fonctionne selon un cycle à quatre temps qui se répète tant qu'il y a des matières à filtrer :
- un temps d'admission au cours duquel la chambre de compression se remplit de la boue à filtrer ;
- un temps de compression au cours duquel le contenu de la chambre de compression est pressé entre le piston-presse et la surface filtrante de la cage rotative qui lui fait face ;
- un temps d'extraction du gâteau de filtration au cours duquel celle-ci est éjectée par le mouvement de rotation de la cage ;
- un temps de retour à la position de repos le filtre suivant de la cage rotative vient se présenter sous la chambre de compression tandis que le piston-presse s'efface vers le haut, dégageant l'espace de filtration pour un nouveau cycle.

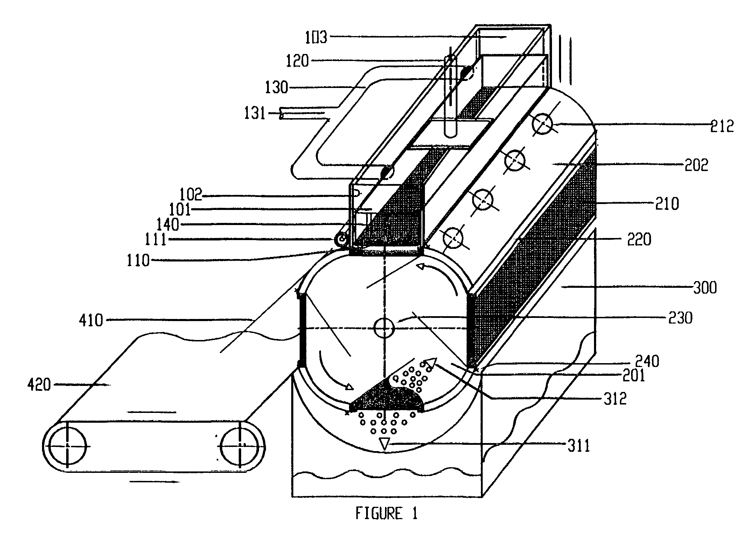

La description donnée ci-après avec référence aux dessins annexés d'un mode de réalisation permettra de mieux comprendre la structure et le fonctionnement du séparateur selon l'invention. La figure 1 est le schéma en perspective d'un séparateur rotatif à cinq surfaces filtrantes, une surface filtrante équipant le piston-presse faisant alors office de piston-filtre, les quatre étant autres disposées symétriquement sur la cage rotative. A titre indicatif, le volume de la machine est d'environ 1 m³. La machine est représentée à vide en fin de temps de compression. On y voit :

La chambre de compression, équipement fixe dont on distingue les parois latérales 101 et 102, la paroi supérieure 103, à l'intérieur de laquelle circule un piston-filtre de compression 110 animé d'un mouvement vertical sous l'effet du vérin hydraulique 120. Le piston-presse, ici équipé en piston-filtre, est un plateau en plaque perforée supportant une toile de drainage puis la toile filtrante, préférentiellement en acier inoxydable, à mailles carrées d'un passage inférieur à 200 µm. La chambre est en communication avec le mélangeur final via la canalisation d'amenée des boues 130 munie d'une vanne à pincement 131 (non représentée). Au-dessus des toiles du piston-filtre, une batterie de buses d'aspiration 111 montées sur circuit à vide entraînent les effluents hauts vers le bac de récupération d'effluents 300.

Le rotor à plaque filtrante dont on voit les parois pleines 201 et 202, les quatre surfaces filtrantes 210, qui sont des cadres amovibles sur glissières 220, supportant des toiles de drainage puis les toiles filtrantes, préférentiellement en matière synthétique, à mailles carrées d'un passage inférieur à 100 µm. Son axe 230 est horizontal et est entraîné par un moteur électrique pas à pas exécutant des quarts de tour pour le positionnement, et l'ajustement étanche des surfaces filtrantes sous la chambre de compression. Les parois pleines 202 sont percées de trous 212 qui servent d'orifice de sortie des effluents. Des brosses rotatives 240 sont disposées sur l'extérieur du rotor, à l'arrière de chaque filtre.

L'ensemble est posé sur un bâti 300 qui sert de bac de récupération des effluents et qui porte intérieurement des buses hydrauliques de nettoyage 311 et 312 au-dessus et au-dessous des filtres.

L'appareil est complété par une palette 410 pour le décollement et le guidage des gâteaux de filtration vers un tapis d'entraînement 420.

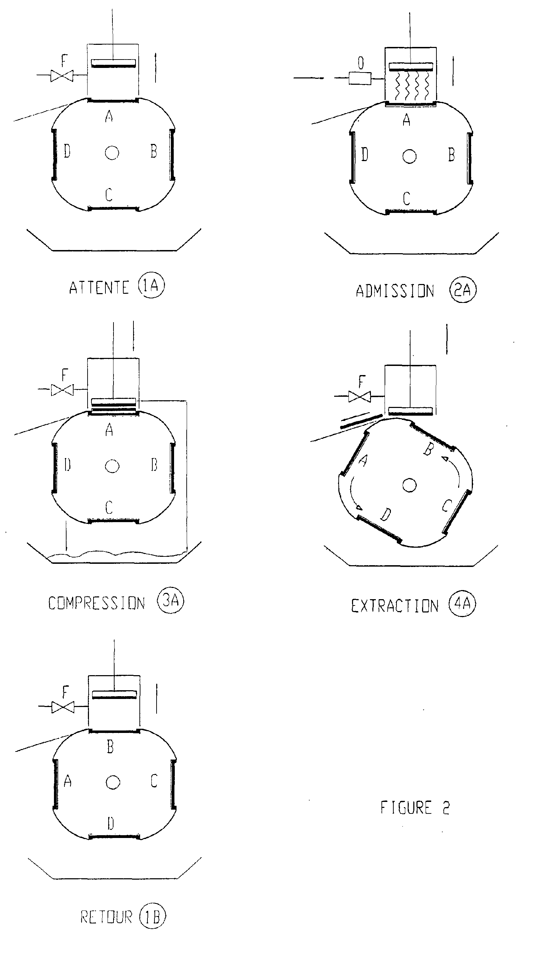

L'appareil fonctionne comme suit. On se reportera à la figure 2, où les indications, reprises au commentaire, chiffrées 1, 2, 3 et 4 se rapportent successivement aux temps d'attente, d'admission, de compression et d'extraction, littérales A, B, C, D désignant le filtre du cylindre filtrant se trouvant en position horizontale haute. On y reconnaît de façon schématique la chambre et son piston, la vanne à pincement symbolisée par la bobine F en position fermée, le rectangle O en position ouverte, les quatre surfaces filtrantes 220 notées A, B, C et D.

En position d'attente (temps 1A), le piston-filtre 110 est en position haute, la chambre de compression est ajustée sur une plaque filtrante du rotor 202A. La vanne à pincement 131 est fermée.

Durant le temps d'admission (temps 2A), les positions des pièces mécaniques sont celles du temps 1A, mais la vanne à pincement est ouverte. Les boues envahissent la chambre de compression par gravité ; elles commencent à filtrer spontanément au travers du filtre 202A, et les eaux s'évacuent par gravité au travers des orifices 212 dans le bac du bâti 300.

Le temps de compression (temps 3A) débute par la fermeture de la vanne de pincement 131 qui isole ainsi la chambre du circuit d'alimentation. Le vérin 120 pousse vers le bas le piston-filtre 110 qui vient comprimer les boues contre les toiles de la surface filtrante 202A. Les liquides s'échappent pour une part au travers de cette toile filtrante et tombent par gravité dans le bac 300 au travers des orifices 212, pour l'autre part au travers du piston-filtre par aspiration par les buses 111 qui les conduisent également vers le bac 300. En fin de temps, il reste entre les deux filtres un gâteau de matière, dont la siccité est de 30 à 35%.

Durant le temps d'extraction (temps 3A), la vanne à pincement reste fermée, le piston-filtre va effectuer un mouvement de recul limité qui va permettre une décompression au niveau des filtres et du gâteau, mais reste dans une position basse de façon à ce que soit conservé le contact entre le gâteau et la lèvre de la paroi, sans toutefois contact métal-métal ; le rotor exécute une rotation d'un quart de tour, ce qui a pour effet de décoller le gâteau de filtration et d'entraîner sa chute vers le tapis d'évacuation du solide 420. Par simple effet de la rotation, la lèvre de la paroi 202 du rotor racle la surface du filtre de compression. Les brosses rotatives 240 situées à l'arrière de chaque filtre aident au décollement et au nettoyage du piston-filtre.

Au temps de retour (temps 1B), on revient à une situation mécanique identique à celle du temps 1A, à la différence que maintenant, c'est le filtre 210B qui est venu se placer sous la chambre de compression, le piston-filtre ne reprenant sa position haute que lorsque le rotor a exécuté son quart de tour complet. Le cycle s'est effectué en 30 secondes et le suivant peut s'enchaîner immédiatement.

Toutes les heures environ, le cycle est interrompu par une séquence de nettoyage des filtres. Elle est exécutée pour chacun des filtres rotatifs 210A, 210B, 210C, et 210D en position basse le système étant respectivement et successivement amené dans les positions d'attente 1C, 1D, 1A et 1B, sous l'action des buses hydrauliques 311 et 312 opérant sous haute pression, et en cas de nécessité pour le filtre inox du piston-filtre par lavage à contre-courant à travers le circuit de vide et ses buses d'aspiration 111.

L'accès à la chambre de compression se fait par basculement de l'ensemble autour de la charnière 140 sur la figure 1). Un dispositif de levage est prévu à cet effet.

Etant donnée l'importance des surfaces filtrantes sur le cylindre rotatif, il n'est pas toujours indispensable de doter le piston-presse 110 d'un équipage de filtration. Dans ce cas, ce matériel peut être simplifié, une plaque de téflon venant remplacer les éléments filtrants.

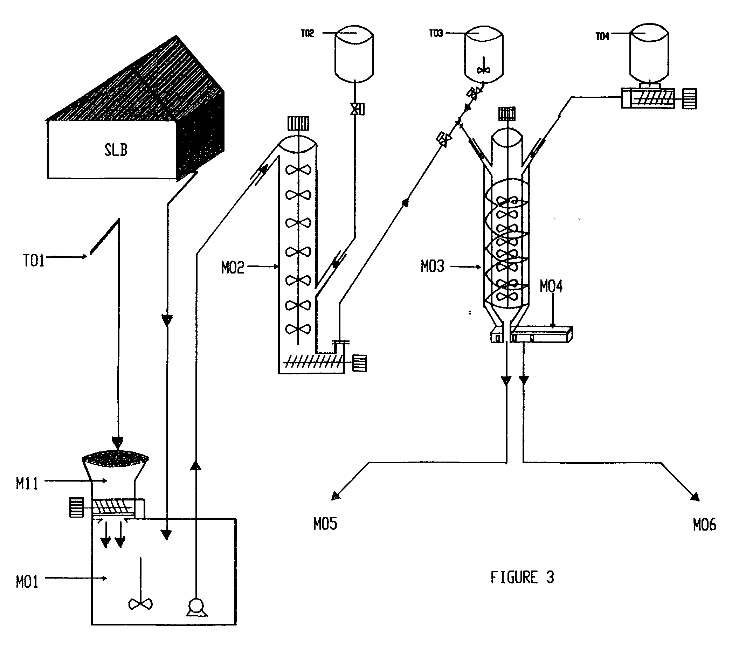

La figure 3 illustre à titre d'exemple une installation selon l'invention d'une capacité dynamique d'environ 10.000 m³/an. On y distingue :
En SLB la source de boue ;
En M01 le mélangeur primaire qui est une cuve couverte de 100 m³, son agitateur à mouvement lent et sa pompe de renvoi, alimenté en boue à partir de SLB, et en texturant à partir d'une source T01 avec dispositif d'introduction M11 (crible et broyeur) ;
En M02, le mélangeur secondaire, un tube en polypropylène de 3 mètres, diamètre 0,6 mètre, avec un agitateur à 7 pales tournant à 240 t/min, pompe à rotor excentré, et son alimentation T02 en agent coagulant ;
En M03, le mélangeur final, un tube en inox, d'une hauteur de 3,3 mètres pour un diamètre de 0,25 mètre, avec agitateur à huit pales tournant à environ 200 t/min, à double peau renfermant le système de chauffage et de régulation de température, son alimentation T03 en floculant, une alimentation complémentaire en matières fibreuses sèches T04 ;
En M04, le séparateur de phases, qui débouche d'une part sur le bâtiment stockage et post-traitement du solide M05 (non représenté) d'autre part sur le circuit de réception et de post-traitement du filtrat MO6 (non représenté).

Tous les agitateurs sont actionnés par des moteurs à variateurs.

Les liquides filtrés issus du séparateur, qui présentent une très faible turbidité, rassemblant l'essentiel de l'azote ammoniacal. Ils peuvent être gérés sur place selon un plan d'épandage. Plus écologiquement, ils peuvent être post-traités en vue de leur rejet en milieu naturel. Pour cela, on peut par exemple leur faire subir une filtration poussée suivie d'une concentration membranaire (osmose inverse), ou encore les diriger vers une fosse biologique pour nitrification-dénitrification sous l'action d'une flore bactérienne ou algale appropriée, puis après décantation vers une surface de lagunage, un processus qui en élimine l'azote sous forme gazeuse libre. Les boues générées par ces traitements sont renvoyées au mélangeur primaire.

Le solide sort du séparateur sous la forme de gâteaux dont la siccité est d'environ 30 %. Ces gâteaux sont évacués vers une chaîne d'évacuation, stockage et post-traitement. Une telle chaîne comprend généralement, outre le tapis qui enlève les gâteaux à leur sortie du séparateur, un éventuel système d'essorage mécanique des gâteaux (passage entre rouleaux) qui en améliore la siccité, un bâtiment de séchage à claire-voie avantageusement à sol en briques poreuses au travers duquel de l'air est insufflé en permanence. On peut, si on le désire, conduire le post-traitement en fermentation aérobie qui amène alors en quelques mois le co-produit solide à l'état de compost.

Le compost ainsi obtenu, avec une teneur en P₂O₅ de l'ordre de 20 kg/m³, en azote de 12 kg/m³ et K₂O de 5 kg/m³ est d'excellente valeur agronomique. Le co-produit solide peut aussi être incinéré et ses cendres utilisées dans la fabrication d'engrais minéraux.

Le procédé selon l'invention permet une gestion satisfaisante des boues, en particulier les boues des stations d'épuration et les lisiers, tant les lisiers de porcs que ceux des bovins, des canards, des poules pondeuses, voire des lapins, ou encore des boues générées par les industries alimentaires. Une gestion particulièrement intéressante est le traitement couplé des lisiers avec les boues urbaines et agroalimentaires dont les matières fibreuses sont alors consommées comme agent texturant du lisier au niveau du mélangeur primaire.

## Revendications

1. Procédé de traitement de boue industrielle ou de lisier comportant une texturation de la boue ou du lisier par homogénéisation avec apport de matières fibreuses non colloïdales, sa coagulation et sa floculation, sa séparation en une masse solide et une phase liquide et l'évacuation de chacune des phases séparées, **caractérisé en ce qu'**il consiste :
- à opérer l'essentiel de la texturation dans la cuve de tête de l'installation,
- à opérer la coagulation et la floculation, dans des mélangeurs en ligne,
- à opérer la séparation solide / liquide dans un séparateur, constitué d'un ensemble tubulaire rotatif formant cage de filtration dont la forme générale est celle d'un cylindre à troncatures longitudinales disposées symétriquement par rapport à son axe de rotation et équipées surfaces filtrantes, et d'une chambre statique de compression disposée au-dessus de la cage de filtration de façon à épouser la découpe des surfaces filtrantes, à l'intérieur de laquelle se déplace verticalement un piston-presse, la cage rotative étant montée sur un axe horizontal animé d'une rotation par fractions de tour de façon à amener successivement chacun de ses filtres sous la chambre de compression.

2. Procédé selon la revendication 1, dans lequel la floculation est opérée dans un mélangeur en ligne chauffé à 25-35°C.

3. Procédé selon la revendication 1, dans lequel la matière fibreuse non colloïdale est constituée de déchets verts broyés, de soies de porcs, de débris de céréales, de débris de cellulose, de copeaux et sciures secs ou humides.

4. Procédé selon la revendication 1 dans lequel la matière fibreuse non colloïdale est partiellement le co-produit sec issu de l'installation.

5. Procédé de traitement de lisier selon la revendication 1, dans lequel l'apport de matière fibreuse non colloïdale est partiellement remplacé par un apport de boues urbaines ou issues d'industries agroalimentaires.

6. Un séparateur utilisé dans le procédé de la revendication 1, **caractérisé en ce qu'**il est constitué d'un ensemble tubulaire rotatif formant cage de filtration dont la forme générale est celle d'un cylindre à troncatures longitudinales disposées symétriquement par rapport à son axe de rotation et équipées surfaces filtrantes, et d'une chambre statique de compression disposée au-dessus de la cage de filtration de façon à épouser la découpe des surfaces filtrantes, à l'intérieur de laquelle se déplace verticalement un piston-presse, la cage rotative étant montée sur un axe horizontal animé d'une rotation par fractions de tour de façon à amener successivement chacun de ses filtres sous la chambre de compression.

7. Séparateur selon la revendication 6, dans lequel la cage de filtration est un ensemble rotatif à quatre surfaces filtrantes animé d'un mouvement de rotation par moteur électrique pas à pas exécutant des quarts de tour pour l'exécution de cycles comportant un temps d'admission des boues à filtrer dans la chambre de compression, un temps de compression des boues dans la chambre de compression, un temps d'extraction du gâteau de filtration, un temps de retour à la position de retour pour la préparation d'une filtration sur le filtre suivant.

8. Séparateur selon la revendication 6, équipé de brosses rotatives sur l'extérieur du rotor, à l'arrière des plaques filtrantes.

9. Installation pour la mise en oeuvre du procédé selon la revendication 1, **caractérisé en ce qu'**elle comporte :
- un mélangeur primaire (M01) sous forme d'une cuve qui recueille les boues ou lisiers en provenance de leur point de production ou de stockage temporaire et reçoit un structurant ;
- un mélangeur secondaire (M02) sous forme d'un tube avec agitateur central multipale qui reçoit les boues ou lisiers homogénéisés et structurés et dans lequel s'opère leur coagulation ;
- un mélangeur final (M03) réchauffé, sous forme d'un tube avec agitateur central multipale qui reçoit les boues ou lisiers coagulés et dans lequel s'opère leur floculation et leur fluidisation, le cas échéant un ajustement de leur teneur en matières fibreuses sèches ;
- un séparateur (M04) tel que décrit à la revendication 6 qui sépare les boues ou lisiers prétraités du mélangeur final en gâteaux de filtration et phase liquide ;
- une chaîne d'évacuation et de post-traitement des gâteaux de filtration (M05);
- une chaîne d'évacuation et de post-traitement des liquides filtrés (M06).

10. Installation selon la revendication 9, dans laquelle le mélangeur final est équipé de moyens de chauffage pour porter la boue ou le lisier texturé, coagulé et floculé à une température de 25 à 35°C avant introduction dans le séparateur.
